# DEMANDE DE BREVET EUROPEEN

(11) **EP 1 310 693 A1**
(43) Date de publication de la demande: **14.05.2003**
(21) Numéro de dépôt: 02292695.0
(22) Date de dépôt: 30.10.2002
(51) Int. Cl.: F16D 23/06

(54) **Dispositif de synchronisation pour boite de vitesses**

(30) Priorité: 09.11.2001 FR 0114522
(71) Demandeur: Renault s.a.s., 92100 Boulogne Billancourt (FR)
(72) Inventeur: Losq, Robert, 78310 Maurepas (FR); Raoul, Michel, 78990 Elancourt (FR)

(57) **Abrégé**

Dispositif de synchronisation d'un pignon (7a, 7b) libre en rotation sur un arbre (2) de boîte de vitesses comportant un moyeu (1) solidaire de l'arbre (2) un baladeur (3) pouvant coulisser axialement sur le moyeu (1), en vue de déplacer l'un ou l'autre des deux anneaux de synchronisation (6a , 6b) contre un pignon (7a , 7b) par l'intermédiaire de clavettes (8) repoussées radialement vers le baladeur (3) au moyen de billes (5) et de ressorts hélicoïdaux (4), caractérisé en ce que les clavettes (8) présentent sur toute leur largeur un évidement intérieur (8a) coopérant avec une bille (5) et une bossette extérieure (8b) coopérant avec une encoche (3a) du baladeur (3).

## Description

La présente invention est relative à un dispositif de synchronisation, ou synchroniseur, pour boîte de vitesses, notamment de véhicule automobile.

Les synchroniseurs de boîtes de vitesses mécaniques sont constitués essentiellement d'un moyeu fixé sur un arbre rotatif de la boîte, d'un baladeur solidaire en rotation du moyeu, mais déplaçable en translation le long de celui-ci sous la commande d'une fourchette reliée au levier de changement de vitesses du véhicule, et d'anneaux de synchronisation déplacés par le baladeur en direction de pignons de vitesse tournant librement autour de l'arbre rotatif.

De façon habituelle, le baladeur vient en prise par sa denture d'accouplement avec celle d'un pignon, après avoir rencontré et traversé la denture d'un anneau de synchronisation, lorsque tout glissement a disparu entre l'anneau et le pignon.

Selon une disposition classique, illustrée notamment par la publication DE19922325, le système de mise en position axiale de l'anneau de synchronisation, dit système d'armement, est composé de clavettes, de billes guidées dans les clavettes et de ressorts hélicoïdaux disposés dans le moyeu. Dans son déplacement axial, le baladeur entraîne l'ensemble billes et clavettes qui poussent l'anneau de synchronisation contre un pignon.

En position neutre, le baladeur, positionné par une fourchette appartenant au système de commande interne de la boîte de vitesses, positionne à son tour le système d'armement.

En raison des dispersions de position du baladeur dues aux dispersions de la commande, et pour garantir le bon fonctionnement du système d'armement et du synchroniseur, on prévoit généralement au point mort une course morte, ou jeu, suffisante pour assurer le réarmement du système. Ce jeu doit également assurer aux anneaux la liberté axiale nécessaire pour limiter les frottements et les échauffements qui leur sont préjudiciables.

Toutefois, cette course morte augmente la course totale d'engagement du baladeur, et limite de ce fait la démultiplication de la commande. Il en résulte une augmentation des efforts à fournir au levier de vitesses.

La présente invention a pour but d'augmenter la précision de positionnement du baladeur, de réduire la course d'engagement du baladeur et d'augmenter le confort d'utilisation du mécanisme de changement de rapport.

Elle concerne un dispositif de synchronisation d'un pignon libre en rotation sur un arbre de boîte de vitesses, comportant un moyeu solidaire d'un arbre rotatif d'une boîte de vitesses, et un baladeur pouvant coulisser axialement sur le moyeu, en vue de déplacer l'un ou l'autre de deux anneaux de synchronisation contre un pignon par l'intermédiaire de clavettes repoussées radialement vers le baladeur au moyen de billes et de ressorts hélicoïdaux.

Conformément à l'invention, la bille et le ressort sont disposés radialement dans un logement cylindrique du moyeu, de sorte que la bille ne peut se déplacer que radialement, et que chaque clavette présente intérieurement un évidement coopérant avec la bille et extérieurement une bossette coopérant avec une encoche intérieure du baladeur.

De préférence, l'évidement de la clavette a une section en V, et la bossette une section trapézoïdale.

Par ailleurs, l'invention propose que la clavette entraîne l'anneau de synchronisation jusqu'au contact du pignon sans sortir de l'encoche intérieure du baladeur, en repoussant simultanément la bille à l'intérieur du moyeu.

En position neutre, le baladeur se trouve ainsi positionné axialement par rapport au moyeu, non pas par une fourchette de commande, mais par le système d'armement.

La bille est positionnée axialement dans son logement dans le moyeu, qui à son tour positionne axialement la clavette au moyen de son évidement intérieur en forme de V, qui positionne lui même axialement le baladeur par sa bossette extérieure.

La pente de l'évidement intérieur en V de la clavette est différente de celle de la bossette extérieure, de sorte que lors du déplacement axial du baladeur pour l'engagement d'un rapport, le baladeur entraîne avec lui la clavette jusqu'à ce que celle-ci rencontre l'anneau de synchronisation, repousse ce dernier jusqu'au pignon et joue un rôle pendant la phase d'armement.

De préférence, la pente de l'évidement intérieur est moins forte que celle de la bossette extérieure.

Lors du déplacement axial du baladeur au delà de la position de synchronisation, la clavette est bloquée axialement par l'anneau de synchronisation. Elle s'échappe radialement et repousse la bille dans son logement. La bille ne sortant pas du logement en V de la clavette, a tendance à recentrer la clavette par rapport au moyeu quand le baladeur est en position crabotée ou au plus tard sous l'effet d'entraînement par frottement de la clavette sur le baladeur lors du retour de ce dernier au point mort. Ainsi le recentrage du baladeur à son retour au point mort est assuré.

En position de rapport engagé, la bossette extérieure de la clavette se place dans une encoche du baladeur de forme correspondante. Le baladeur se trouve ainsi également positionné car la clavette, exerçant une poussée axiale permanente sur lui, le maintien en appui contre une butée axiale intégrée au pignon, par exemple extérieurement au crabot.

D'autres caractéristiques et avantages de l'invention apparaîtront clairement à la lecture de la description suivante d'un mode de réalisation particulier de celle-ci, en liaison avec les dessins annexés sur lesquels :
- la figure 1 est une coupe longitudinale du dispositif de synchronisation en position point mort ou neutre ;
- la figure 2 est une coupe longitudinale du dispositif de synchronisation en position de synchronisation ;
- la figure 3 est une coupe longitudinale du dispositif de synchronisation en position craboté ;
- la figure 4 est une vue du moyeu assemblé ;
- la figure 5 est une coupe longitudinale de la clavette ;
- la figure 6 est une coupe transversale de la clavette.

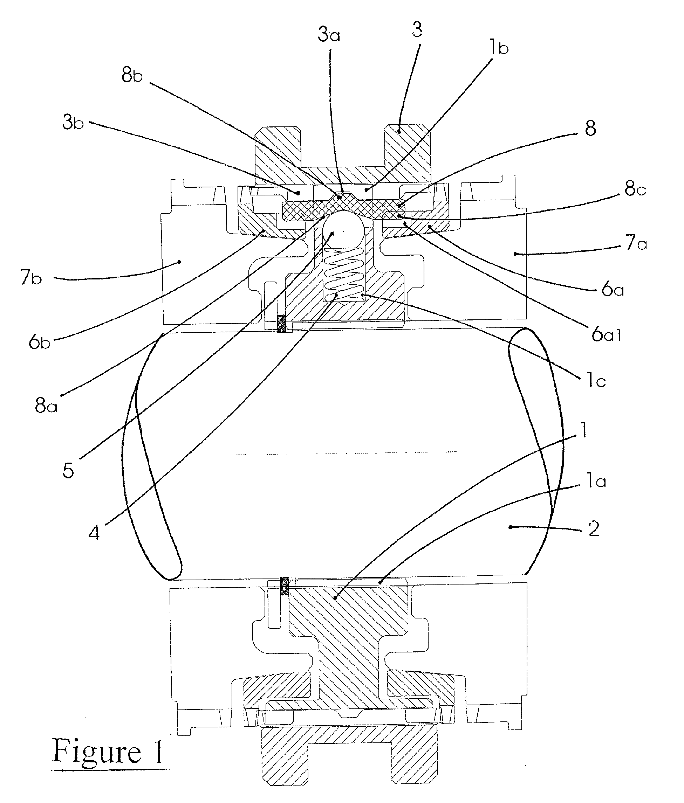

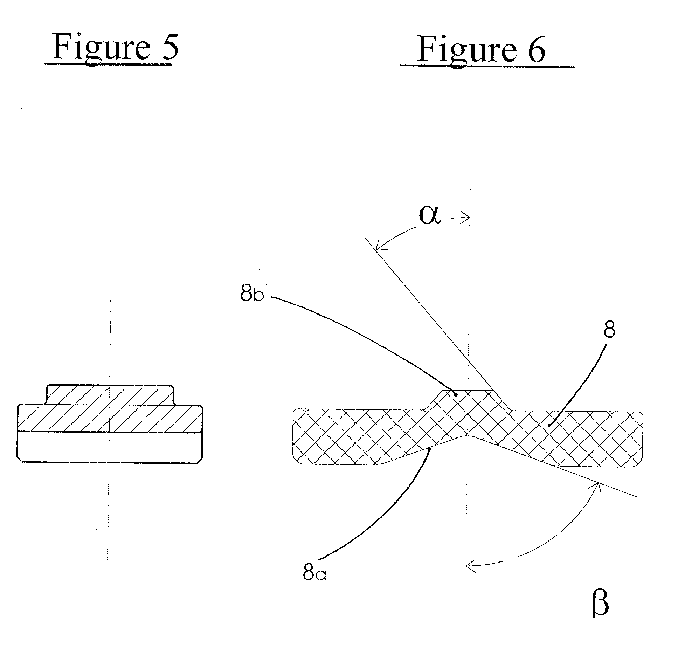

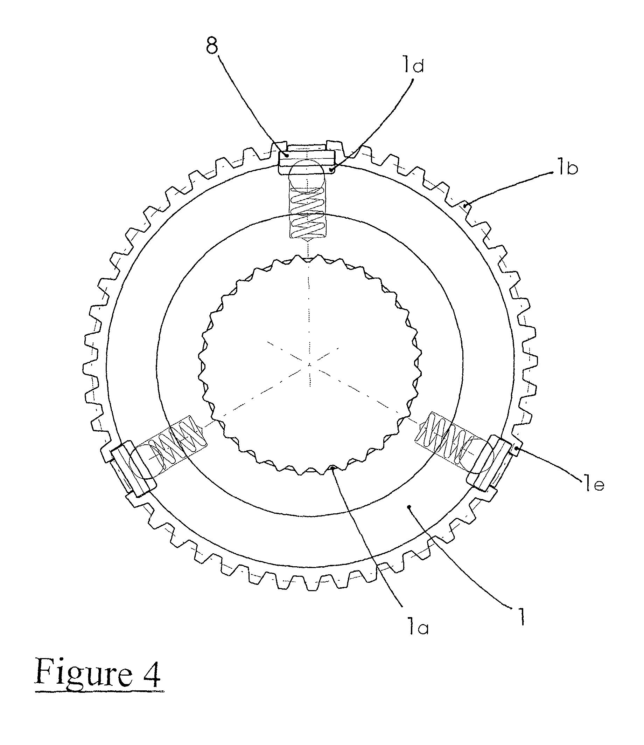

Le dispositif de synchronisation représenté sur la figure 1 comporte un moyeu 1 solidaire par des cannelures intérieures 1a, d'un arbre rotatif 2, tel que l'arbre secondaire d'une boîte de vitesses. Le moyeu 1 présente des cannelures extérieures 1b (visibles sur la figure 4) de guidage axial et d'entraînement en rotation d'un baladeur 3, et trois logements cylindriques radiaux 1c disposés à 120°, qui contiennent les ressorts hélicoïdaux 4 et guident les billes 5 du dispositif d'armement.

Le dispositif de la figure 1 est un synchroniseur double, muni de deux anneaux de synchronisation 6a et 6b, déplaçables respectivement en direction d'un premier et d'un second pignon de vitesses 7a et 7b (représentés partiellement), pour engager deux rapports distincts, sous l'action du baladeur 3 sollicité par l'intermédiaire d'une fourchette et d'un mécanisme de commande non représentés, à partir du levier de changement de vitesses du véhicule.

Le système d'armement du synchroniseur est constitué par les ressorts 4, et les billes 5 mentionnés plus haut, ainsi que par trois clavettes 8 intercalées entre les billes 5 et le baladeur 3. Chaque clavette 8 présente sur sa face intérieure un évidement intérieur en forme de rainure 8a sur toute sa largeur.

L'évidement 8a a une section en V, dont les côtés forment un angle β par rapport à une direction radiale. Sur leur face extérieure, les clavettes présentent une bossette 8b en forme, non limitative, de trapèze dont les cotés sont inclinés d'un angle α par rapport à la même direction radiale ( voir figures 5 et 6).

Conformément à l'invention, l'angle β est plus grand que l'angle α. Autrement dit, l'évidement 8a a une section en V, la bossette 8b une section trapézoïdale, et la pente de l'évidement est supérieure à celle de la bossette.

La bossette 8b coopère avec une rainure, ou encoche 3a, ménagée dans la cannelure intérieure du baladeur 3b. Chaque clavette 8 est guidée pour son déplacement axial dans une encoche 1d du moyeu 1 ( voir figure 4). L'ensemble du dispositif d'armement, ressorts, billes et clavettes, est assemblé dans le moyeu de manière stable car les clavettes sont retenues radialement par les prolongements le recouvrant partiellement la clavette. La clavette, par ses extrémités 8c, coopère avec des évidements 6a1 des anneaux 6a et autorise la rotation relative de l'anneau de la valeur de l'angle d'indexage nécessaire à la mise en position de l'anneau avant la phase de synchronisation.

Conformément à l'invention, le système d'armement du synchroniseur positionne axialement le baladeur de la façon suivante. La bille 5 est guidée dans le logement cylindrique 1c du moyeu 1, et le ressort 4 repousse la bille vers l'évidement 8a de la clavette 8, en positionnant celle-ci axialement par rapport au moyeu. La clavette est repoussée à son tour vers le baladeur 3, et les côtés inclinés de la bossette 8b coopèrent avec l'encoche 3a du baladeur, dont la découpe correspond à celle de la bossette.

Grâce à ces dispositions, le baladeur est positionné axialement par rapport aux clavettes et par rapport au moyeu. Ce positionnement précis du baladeur par rapport au moyeu est indépendant du système de commande. Il permet d'augmenter la précision de l'ensemble du dispositif de synchronisation, de réduire en les optimisant les jeux ou gardes en position neutre. La course du baladeur nécessaire à l'engagement du rapport peut ainsi être réduite.

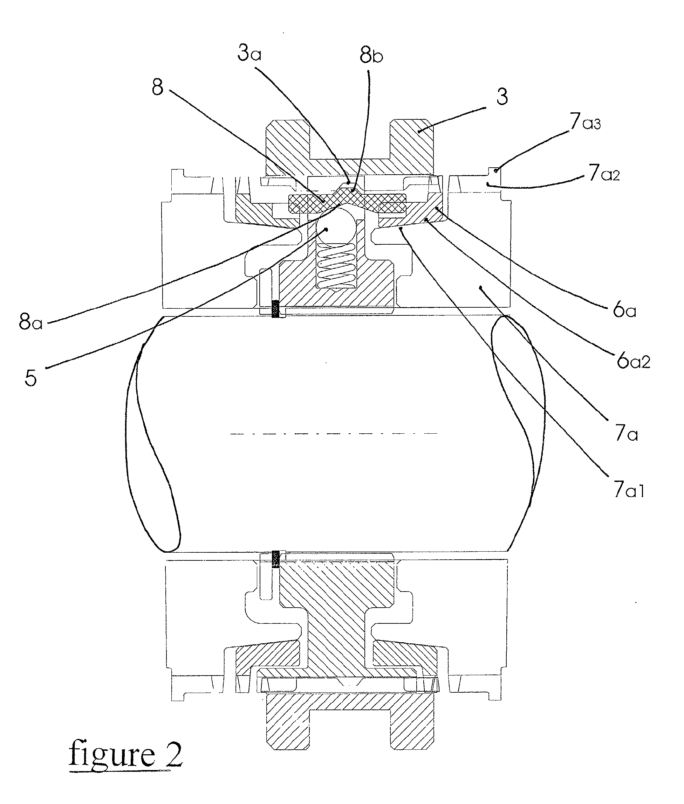

Sur la figure 2, le dispositif de synchronisation est en position de synchronisation. Au cours de son déplacement axial, le baladeur 3 entraîne la clavette 8, car la pente de la bossette 8b coopérant avec l'encoche 3a du baladeur est plus forte que celle de l'évidement 8a coopérant avec la bille 5. Au cours de son déplacement, la clavette repousse la bille dans son logement, entre en contact avec l'anneau de synchronisation 6a, et entraîne ce dernier jusqu'à ce qu'il entre, à son tour, en contact avec le pignon 7a par les surfaces coniques 6a2 et 7a1. Le choix judicieux des pentes de la bossette 8b et de l'évidement 8a permet donc à la clavette d'accompagner le baladeur pour jouer son rôle d'armement du dispositif de synchronisation.

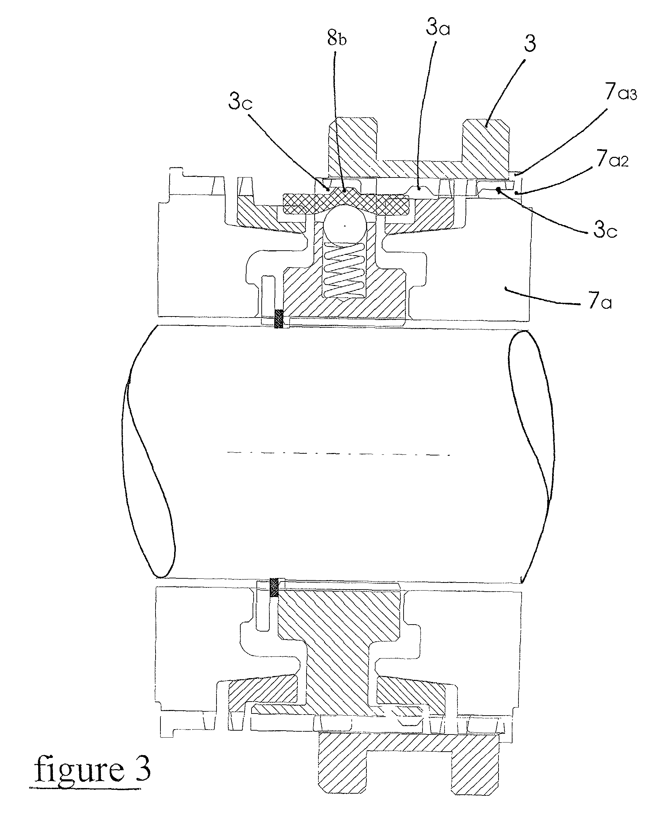

Sur la figure 3, le dispositif de synchronisation est en position de rapport engagé. Au delà de la phase de synchronisation, le baladeur 3 n'entraîne plus la clavette , qui reste bloquée axialement par l'anneau de synchronisation dans sa position de la figure 2. La clavette 8 est repoussée radialement jusqu'à ce que la bossette 8b soit sortie de l'encoche 3a. Le sommet de la bossette est alors en contact plan avec le baladeur. Lorsque la clavette est en position de synchronisation, c'est à dire dans sa position extrême en direction axiale, la bille 5 n'échappe pas de l'encoche 8a. Elle exerce au contraire sur les flancs de l'évidement 8a un effort rappelant la clavette vers sa position neutre, dès que la bossette 8b échappe de l'encoche 3a du baladeur 3.

Par ailleurs, des encoches d'extrémité 3c sont découpées à chaque bord des cannelures intérieures du baladeur. Les encoches 3c ont la même pente et la même profondeur que l'encoche centrale 3a.du baladeur. En fin de course du baladeur, les bossettes 8b des clavettes 8, repoussées radialement vers l'extérieur, se logent dans les encoches 3c du baladeur. Dans cette situation, les clavettes 8 exercent une poussée axiale sur le baladeur, en repoussant celui-ci vers un rebord 7a3 dépassant des dentures de crabot 7a2 du pignon 7a, 7b. Le baladeur est ainsi maintenu en appui permanent contre le pignon 7a en position de rapport engagé, quelles que soient les sollicitations en couple dans la boîte ce qui permet de garantir un bon accrochage entre le baladeur et le pignon.

En conclusion, le dispositif de synchronisation proposé permet de préparer la synchronisation en positionnant l'anneau, de localiser précisément le baladeur tant en position neutre qu'en position de vitesse engagée. Le positionnement du baladeur ne dépend donc pas de la commande, ce qui permet, par une simple optimisation des chaînes de cotes, de réduire la course totale du baladeur, d'augmenter la démultiplication de la commande, et par conséquent de réduire, les efforts de manoeuvre du conducteur.

## Revendications

1. Dispositif de synchronisation d'un pignon (7a, 7b) libre en rotation sur un arbre (2) de boîte de vitesses comportant un moyeu (1) solidaire de l'arbre (2) un baladeur (3) pouvant coulisser axialement sur le moyeu (1), en vue de déplacer l'un ou l'autre de deux anneaux de synchronisation (6a , 6b) contre un pignon (7a , 7b) par l'intermédiaire de clavettes (8) repoussées radialement vers le baladeur (3) au moyen de billes (5) et de ressorts hélicoïdaux (4), **caractérisé en ce que** les clavettes (8) présentent sur toute leur largeur un évidement intérieur (8a) coopérant avec une bille (5) guidée dans un logement cylindrique du moyeu, et une bossette extérieure (8b) coopérant avec une encoche centrale (3a) du baladeur (3).

2. Dispositif de synchronisation selon la revendication 1 **caractérisé en ce que** la pente de l'évidement (8a) est supérieure à celle de la bossette (8b).

3. Dispositif de synchronisation selon la revendication 1 ou 2, **caractérisé en ce que** l'évidement (8a) a une section en V, et **en ce que** la bossette (8b) a une section trapézoïdale.

4. Dispositif selon la revendication 1, 2 ou 3, **caractérisé en ce que** la clavette entraîne l'anneau de synchronisation jusqu'au contact du pignon sans sortir de l'encoche (3a) du

5. Dispositif de synchronisation selon l'une des revendications précédentes, **caractérisé en ce que** la clavette (8) échappe de l'encoche (3a) du baladeur et est rappelé par la bille (5) dans sa position centrale lorsque l'anneau (6) est entré en contact avec le pignon (7).

6. Dispositif de synchronisation selon l'une des revendications précédentes, **caractérisé en ce que** la clavette (8) coopère par ses extrémités (8c) avec des évidements (6a1) de l'anneau autorisant l'indexage de ce dernier par rapport au baladeur avant la phase de synchronisation.

7. Dispositif de synchronisation selon l'une des revendications précédentes, **caractérisé en ce que** le baladeur (3) présente à chaque extrémité une encoche (3c) recevant la bossette (8b) de la clavette, en position de rapport engagé,

8. Dispositif de synchronisation selon la revendication 7, **caractérisé en ce que** l'encoche centrale (3a) et les deux encoches d'extrémité (3c) ont la même pente.

9. Dispositif de synchronisation selon l'une des revendications précédentes, **caractérisé en ce que** les bossettes (8b) maintiennent le baladeur en appui contre un rebord de fin de course de crabotage (7a3) du pignon en position de rapport engagé.
